# EUROPÄISCHE PATENTSCHRIFT

(11) **EP 1 144 316 B1**
(45) Veröffentlichungstag und Bekanntmachung des Hinweises auf die Patenterteilung: **25.09.2002**
(21) Anmeldenummer: 99963552.7
(22) Anmeldetag: 21.12.1999
(51) Int. Cl.: C02F 3/02

(54) **VERWENDUNG VON ÖL-IN-WASSER-EMULSIONEN IN AEROBEN BIOLOGISCHEN KLÄRANLAGEN**
UTILIZATION OF OIL-IN-WATER EMULSIONS IN AEROBIC BIOLOGICAL SEWAGE TREATMENT PLANTS
UTILISATION D'EMULSIONS DU TYPE HUILE DANS L'EAU DANS DES INSTALLATIONS DE DECANTATION BIOLOGIQUES EN AEROBIE

(30) Priorität: 22.12.1998 DE 19859054
(43) Veröffentlichungstag der Anmeldung: 17.10.2001
(73) Patentinhaber: STOCKHAUSEN GmbH & Co. KG, 47805 Krefeld (DE)
(72) Erfinder: MIELKE, Klaus, D-09648 Kriebetal (DE); WERRES, Joachim, D-49457 Drebber (DE); SCHULTE, Johann, D-47803 Krefeld (DE); WEBERS, Uwe, D-40670 Meerbusch (DE)
(74) Vertreter: Wolff, Felix, Dr.
(86) Internationale Anmeldenummer: EP9909990
(87) Internationale Veröffentlichungsnummer: WO00037368

(56) Entgegenhaltungen:
- DE-A- 3 815 309
- DE-A- 4 227 962
- DE-A- 19 644 714
- US-A- 5 354 480

## Beschreibung

Die vorliegende Erfindung betrifft die Verwendung von Öl-in-Wasser-Emulsionen zur Reduzierung des Luft- und/oder Sauerstoffbedarfs von aeroben, biologischen Kläranlagen. Die vorliegende Erfindung betrifft ferner die Verwendung von Öl-in-Wasser-Emulsionen zur Verbesserung der Denitrifikation in aeroben, biologischen Kläranlagen.

Kläranlagen werden zur Reinigung von kommunalen und/oder industriellen Abwässern eingesetzt, um das Abwasser von groben Schmutzpartikeln und biologisch abbaubaren Substanzen zu befreien. In der Regel bestehen Kläranlagen aus einer mechanischen Abwasserreinigung, in der die groben Schmutzpartikel sowie der Primärschlamm entfernt werden, und einer biologischen Abwasserreinigung.

Der erste Teil der biologischen Abwasserreinigung ist das sogenannte Belebungsbecken. In diesem Belebungsbecken befindet sich der Belebtschlamm, der in der Randzone aus flockenbildenden Mikroorganismen besteht. Das zu reinigende Abwasser wird in dieses Belebungsbecken eingeleitet und mit dem Belebtschlamm vermischt, so daß eine Suspension aus Wasser und Mikroorganismen entsteht Enzyme, die von den Mikroorganismen ständig gebildet werden, katalysieren die Oxidation der organischen und der NH₄-haltigen Abwasserinhaltsstoffe zu CO₂ und H₂O bzw. NO₂ und H₂O. Da für die Oxidation der Abwasserinhaltsstoffe und für die Atmung der Mikroorganismen Sauerstoff benötigt wird, muß die Suspension belüftet werden. Die Belüftung erfolgt in der Regel mit Luft, mit Sauerstoff angereicherter Luft oder mit reinem Sauerstoff, wobei eine Sauerstoffkonzentration von 1-3 mg/l in der Suspension sichergestellt werden muß.

Nach einer gewissen Verweilzeit des Abwassers in dem Belebungsbecken sind nahezu alle biologisch abbaubaren Abwasserinhaltsstoffe oxidiert und die Suspension wird in ein Nachklärbecken gepumpt, in dem das gereinigte Wasser von den Mikroorganismen meist durch Sedimentation getrennt wird. Die Mikroorganismen werden in das Belebungsbecken zurückgepumpt, während das gereinigte Wasser die Kläranlage verläßt.

Die Versorgung des Belebungsbeckens mit Sauerstoff erfolgt durch Belüftungssysteme, die die Luft und/oder den Sauerstoff meist feinblasig in dem Belebungsbecken verteilen. Obwohl diese Belüftungssysteme über viele Jahre optimiert worden sind, ist die Sauerstoffzufuhr auch heute noch sehr energieaufwendig und damit kostspielig, weil die Belüftungssysteme in der Regel einen sehr hohen Druckverlust aufweisen.

Aufgabe der Erfindung war daher, Stoffe bzw. Zusammensetzungen zur Verfügung zu stellen, mit denen der Sauerstoffbedarf und damit die Energiekosten in aeroben, biologischen Kläranlagen reduziert werden kann.

Die Aufgabe wird erfindungsgemäß durch Verwendung von Öl-in-Wasser-Emulsionen zur Reduzierung des Luft- und/oder Sauerstoffbedarfs von aeroben biologischen Kläranlagen gelöst, wobei die Öl-in-Wasser-Emulsionen in der Ölphase wenigstens eine Verbindung der folgenden Verbindungsklassen oder eine Mischung aus Vertretern der folgenden Verbindungsklassen enthalten:
- gesättigte oder ungesättigte, offenkettige oder zyklische, normale oder isomere Kohlenwasserstoffe mit 8-30 Kohlenstoffatomen,
- gesättigte oder ungesättigte Fettalkohole, gesättigte oder ungesättigte Fettsäuren, Fettsäuremonoalkylester, Fettsäureamide oder Fettsäuremonoalkylamide von gesättigten oder ungesättigten Fettsäuren, wobei die Fettalkohole, die Fettsäuren und Fettsäureester der aufgeführten Verbindungen 8-30 Kohlenstoffatome aufweisen,
- Mono- oder Polyester einer gesättigten oder ungesättigten Carbonsäure oder Dicarbonsäure mit 4-30 Kohlenstoffatomen und einem Monoalkohol und/oder einem Polyol,
- Polyamide von gesättigten oder ungesättigten Fettsäuren mit 8-30 Kohlenstoffatomen und aliphatischen Polyaminen mit 2-6 Stickstoffatomen,
- acyclische, monocyclische und/oder bicyclische Terpene, insbesondere Terpenkohlenwasserstoffe und/oder Terpenalkohole und/oder
- Polyoxyalkylenverbindungen auf der Basis von Alkylenoxiden und Alkylenoxiden mit Fettalkoholen und/oder C₁₂-C₁₈-Fettsäuren und/oder Fettsäureglyceriden von C₁₂-C₁₈-Fettsäuren.

Die beschriebenen Öl-in-Wasser-Emulsionen sind aus verschiedenen Bereichen bekannt Es war jedoch überraschend, festzustellen, daß diese Emulsionen die Eigenschaft haben, den Sauerstoffbedarf von aeroben biologischen Kläranlagen zu reduzieren.

Eine aerobe biologische Kläranlage im Sinne der Erfindung ist jede dem Fachmann bekannte kommunale und/oder industrielle Kläranlage, bei der die biologisch abbaubaren Abwasserinhaltsstoffe durch Oxidation aus dem Abwasser eliminiert werden. Solche Kläranlagen sind z. B. in dem Taschenbuch der Stadtentwässerung, R. Oldenburg Verlag, München, Wien 1990, Seite 81-333, Ullmann's Encyclopedia of Industrial Chemistry, VCH-Verlagsgesellschaft, 1995, Kapitel 2.1 beschrieben, die hiermit als Referenz eingeführt werden und somit Teil der Offenbarung sind.

Diese aeroben, biologischen Kläranlagen weisen vorzugsweise ein Belebungsbecken auf, in denen die Mikroorganismen entweder suspendiert oder immobilisiert sind, wobei suspendierte Mikroorganismen bevorzugt werden. In die Belebungsbecken wird soviel Sauerstoff eingetragen, daß die Sauerstoffkonzentration In der die Mikroorganismen umgebenden Flüssigkeit vorzugsweise 1-3 mg/l beträgt. Der Sauerstoff kann als Luftsauerstoff und/oder als reiner Sauerstoff in das Belebungsbecken eingetragen werden.

Die Herstellung der erfindungsgemäß zu verwendenden Emulsionen, insbesondere stabiler Öl-in-Wasser-Emuisionen ist bekannt. Hierzu wird die Ölkomponente In Wasser mittels geeigneter bekannter Öl-in-Wasser-Emulgatoren emulgiert. Die hydrophobe Phase stellt überwiegend den Wirkstoff dar.

Beispielhaft sind als hydrophobe Ölkomponente zu nennen:
- gesättigte Kohlenwasserstoffe wie Octan, Tetradecan, Octadecan, Eicosan, ungesättigte Kohlenwasserstoffe wie Decen, Hexadecen und technische alpha-Olefine,
- Fettalkohole wie Octanol, Dodecanol, Tridecanol, Hexadecanol, Octadecanol, Behenylalkohol,
- Fettsäuren wie Caprinsäure, Stearinsäure, Melissinsäure, Ölsäure und Linolensäure,
- Fettsäureester wie Stearylsäuremethylester, Palmitinsäureoctadecylester, Ölsäureoctylester, Glycerinmono-und trioleat, Ethylenglykoldilaurat, Sorbitanstearate und -oleate und/oder Adipinsäuredibutylester.
- Fettsäureamide wie Stearylamid, Kokosfettsäurebutylamid, Essigsäureoleylamid und Ethylenbisstearylamid.
- Terpene, wie Menthol oder Orangenterpen (Firma Weißmer Baltische HG, Hamburg).

Weiter geeignete handelsübliche Kohlenwasserstoffe oder Kohlenwasserstoffgemische sind Paraffinöl oder Mineralöl.

Desweiteren sind Fette und Öle auf nativer Basis geeignet, insbesondere pflanzliche Öle und bevorzugt Rapsöl.

Die gesättgten oder ungesättigten Fettalkohole, die erfindungsgemäß als Emulsionskomponente eingesetzt werden können, sind nach bekannten Verfahren, z. B. der Oxosynthese als Oxoalkohole oder nach der Guerbet-Reaktion als Guerbet-Alkohole erhältlich.

Als Polyoxyalkylenverbindungen auf Basis von Alkylenoxiden und/oder Fettsäureglyceriden von C₁₂-C₁₈-Fettsäuren werden insbesondere Polyethylenoxid und/oder Polypropylenoxid als solche verwendet, die unter anderen in der DE-AS-1 270 542 und der EP 0 247 509 B1 beschrieben werden.

Bei Einsatz von Terpenen werden diese bevorzugt in Mischung mit einem gesättigten oder ungesättigten Fettalkohol eingesetzt.

Der Anteil der Ölphase In der Öl-in-Wasser-Emulsion beträgt 1-90 Gew.%, vorzugsweise 1-50 Gew.% und besonders bevorzugt 5-30 Gew.% der Gesamtemulsion.

Die erfindungsgemäß zu verwendenden Öl-in-Wasser-Emulsionen werden als solche oder in Verdünnung mit Wasser oder Wasser und/oder lösungsmittelhaltigen Mischungen eingesetzt. Die Zugabe der erfindungsgemäß zu verwendenden Emulsion kann an jedem beliebigen Ort vor oder in dem Belebungsbecken erfolgen, wobei eine Zugabe zu dem zu reinigenden Abwasser unmittelbar vor dessen Eintritt in das Belebungsbecken bevorzugt wird.

Die Zugabemenge beträgt vorzugsweise 0,1 bis 1000 ppm, besonders bevorzugt 0,5 bis 200 ppm und ganz besonders bevorzugt 1,0 bis 50 ppm, bezogen auf das zu reinigende Abwasser.

Durch die erfindungsgemäß zum Einsatz kommenden Emulsionen ist es möglich, die Menge an Sauerstoff, die in das Belebungsbecken zur Oxidation der Abwasserinhaltsstoffe eingetragen werden muß, um bis zu 60% zu reduzieren. Die erfindungsgemäß zu verwendenden Emulsionen haben keine oder nur eine geringe Toxizität und können in die Wassergefährdungsklasse 1 eingestuft werden. Sie sind biologisch abbaubar.

Im folgenden wird die Erfindung anhand eines Beispiels erläutert. Diese Erläuterungen sind lediglich beispielhaft und schränken den allgemeinen Erfindungsgedanken nicht ein.

### Beispiel 1

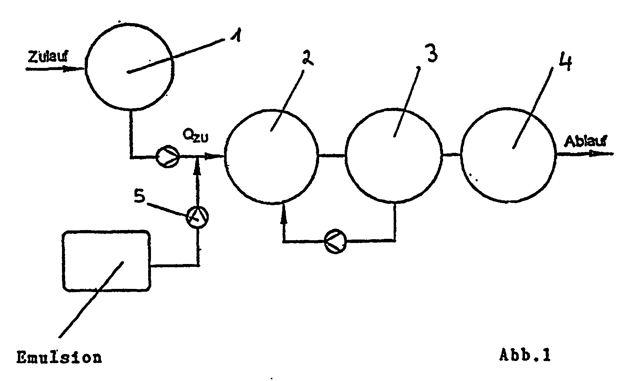

Die beispielsgemäß verwendete Versuchsanlage ist in Abbildung 1 dargestellt und arbeitet nach dem Prinzip der vorgeschalteten Denitrifikation. Die Anlage besteht aus einem Vorlagebehälter 1 und je einem Behälter 2,3 zur Durchführung der Denitrifikation und Nitrifikation, wobei der Behälter 3 das sogenannte Belebungsbecken ist. Die Behälter 2,3 haben jeweils ein Volumen von 90 l. Der Vorlagebehälter 1 dient zum Ausgleich von Schwankungen In der Abwasserzusammensetzung und ist so groß dimensioniert, daß die Abwasserzusammensetzung über ca. 10 Tage konstant bleibt. Ferner weist die Versuchsanlage eine Nachklärung 4 auf.

Aus dem Vorlagebehälter 1 werden 5 l/h Abwasser in den Denitrifikationstank 2 gepumpt. Das Abwasser wird dem Zulauf der Kläranlage Neuss-Süd in Neuss-Weckhoven entnommen, ist jedoch mechanisch vorgereinigt. Das Abwasser ist zu 70% kommunalen und zu 30% industriellen Ursprungs. Nachdem das Abwasser die Denitrifikation 2 durchlaufen hat, in der NO₂ zu N₂ reduziert wird, werden in dem Belebungsbecken 3 die Abwasserinhaltsstoffe oxidiert Danach läuft das Abwasser in die Nachklärung 4, in der der Klärschlamm von dem gereinigten Abwasser getrennt wird. Zur Aufrechterhaltung des biologischen Gleichgewichts wird ein interner Rezirkulationsstrom zwischen Denitrifikation 2 und Belebungsbecken 3 aufrechterhalten.

Das Belebungsbecken 2 weist am Boden ein Belüftungssystem auf, mit dem Luft feinblasig verteilt wird. Die in das Belebungsbecken 2 eingetragene Luftmenge wird so geregelt, daß in dem Belebungsbecken eine Sauerstoffkonzentration von 2 mg/l in der Flüssigkeit herrscht. Die dem Belebungsbehälter 2 zugeführte Luftmenge wird durch ein Rotameter gemessen. Die Sauerstoffkonzentration in der Flüssigkeit wird mit einer Elektrode der Firma WTW gemessen.

In die Zulaufstrecke wird wahlweise mit einer Dosierpumpe 5 kontinuierlich eine Öl-in-Wasser-Emulsion zugesetzt. Diese Emulsion bestand aus 14 kg Terpen, 1,0 kg Hexadecanol, 7 kg eines 75%igen Paraffinsulfonats und 2,1 kg Wasser, die homogen aufgeschmolzen und anschließend unter Rühren in einem 60°C warme Lösung aus 74,5 kg Wasser und 1,4 kg eines mit 20 Mol Ethylenoxid umgesetzten Oleylalkohols eingegossen wurde. Es entstand eine Öl-in-Wasser-Emulsion mit ca. 2,5% Festkörper.

Die Versuchsanlage wurde zunächst über mehrere Tage ohne die Zugabe von dieser Emulsion betrieben, bis sich konstante Verhältnisse in der Versuchsanlage eingestellt hatten. In dieser Zeit wurde u. a. kontinuierlich die eingetragene Luftmenge und die Eliminationsleistung in Bezug auf CSB (chemischer Sauerstoffbedarf) und Stickstoff gemessen. In dieser Zeit betrug der Lufteintrag durchschnittlich 2 l/min.

Nachdem die Versuchsanlage mehrere Tage unter diesen konstanten Bedingungen gearbeitet hat, wurde so viel erfindungsgemäße Öl-in-Wasser-Emulsion in den Zulauf zu Behälter dosiert, daß im Zulauf zu diesem Behälter 2 deren Konzentration 2 ppm betrug. Auch während dieses Versuches wurde die eingetragene Luftmenge und die Eliminationsleistung der Versuchsanlage gemessen. Nach einer Adaptionsphase von ca. 3 Tagen betrug der Lufteintrag nur noch durchschnittlich 1,2 l/min bei ansonsten gleichbleibenden Bedingungen, so daß der Lufteintrag und damit die dafür benötigte Energiemenge um 40% reduziert werden konnte. Die CSB bzw. Stickstoff Eliminationsleistung der Versuchsanlage wurde durch die Zudosierung der erfindungsgemäßen Emulsion nicht beeinträchtigt.

Auch das Sedimentationsverhalten der Mikroorganismen hat sich durch die Zugabe der erfindungsgemäßen Emulsion nicht verändert.

Ein weiterer Gegenstand der vorliegenden Erfindung ist die Verwendung der bezeichneten Öl-in-Wasser-Emulsionen zur Verbesserung der Denitrifikation von aeroben biologischen Kläranlagen, wobei die Öl-in-Wasser-Emulsionen, wie angegeben, in der Ölphase wenigstens eine Verbindung der folgenden Verbindungsklassen oder eine Mischung aus Vertretern der folgenden Verbindungsklassen enthalten:
- gesättigte oder ungesättigte, offenkettige oder zyklische, normale oder isomere Kohlenwasserstoffe mit 8-30 Kohlenstoffatomen,
- gesättigte oder ungesättigte Fettalkohole, gesättigte oder ungesättigte Fettsäuren, Fettsäuremonoalkylester, Fettsäureamide oder Fettsäuremonoalkylamide von gesättigten oder ungesättigten Fettsäuren, wobei die Fettalkohole, die Fettsäuren und Fettsäureester der aufgeführten Verbindungen 8-30 Kohlenstoffatome aufweisen,
- Mono- oder Polyester einer gesättigten oder ungesättigten Carbonsäure oder Dicarbonsäure mit 4-30 Kohlenstoffatomen und einem Monoalkohol und/oder einem Polyol,
- Polyamide von gesättigten oder ungesättigten Fettsäuren mit 8-30 Kohlenstoffatomen und aliphatischen Polyaminen mit 2-6 Stickstoffatomen,
- acyclische, monocyclische und/oder bicyclische Terpene, insbesondere Terpenkohlenwasserstoffe und/oder Terpenalkohole und/oder
- Polyoxyalkylenverbindungen auf der Basis von Alkylenoxiden und Alkylenoxiden mit Fettalkoholen und/oder C₁₂-C₁₈-Fettsäuren und/oder Fettsäureglyceriden von C₁₂-C₁₈-Fettsäuren.

Die beschriebenen Öl-in-Wasser-Emulsionen sind aus verschiedenen Bereichen bekannt. Es war jedoch überraschend, festzustellen, daß durch diese Emulsionen die Denitrifikation in aeroben Kläranlagen verbessert wird.

Eine aerobe biologische Kläranlage im Sinne dieser Erfindung ist jede dem Fachmann bekannte kommunale und/oder industrielle Kläranlage, bei der die biologisch abbaubaren Abwasserinhaltsstoffe durch Oxidation aus dem Abwasser eliminiert werden und die mindestens eine Denitrifikationsstufe aufweist. In der Denitrifikationsstufe wird NO₃⁻ zu N₂ reduziert. Die Denitrifikationsstufe kann vor oder nach dem sogenannten Belebungsbecken angeordnet sein. Vorzugsweise durchläuft das zu behandelnde Abwasser zunächst die Denitrifikationsstufe, bevor es in dem sogenannte Belebungsbecken behandelt wird.

Die Herstellung der erfindungsgemäß zu verwendenden Emulsionen, insbesondere stabiler Öl-in-Wasser-Emulsionen ist bekannt. Hierzu wird die Ölkomponente in Wasser mittels geeigneter bekannter Öl-in-Wasser-Emulgatoren emulgiert. Die hydrophobe Phase stellt überwiegend den Wirkstoff dar.

Beispielhaft sind als hydrophobe Ölkomponente zu nennen:
- gesättigte Kohlenwasserstoffe wie Octan, Tetradecan, Octadecan, Eicosan, ungesättigte kohlenwasserstoffe wie Decen, Hexadecen und technische alpha-Olefine,
- Fettalkohole wie Octanol, Dodecanol, Tridecanol, Hexadecanol, Octadecanol, Behenylalkohol,
- Fettsäuren wie Caprinsäure, Stearinsäure, Melissinsäure, Ölsäure und Linolensäure,
- Fettsäureester wie Stearylsäuremethylester, Palmitinsäureoctadecylester, Ölsäureoctylester, Glycerinmono-und trioleat, Ethylenglykoldilaurat, Sorbitanstearate und -oleate und/oder Adipinsäuredibutylester,
- Fettsäureamide wie Stearylamid, Kokosfettsäurebutylamid, Essigsäureoleylamid und Ethylenbisstearylamid. Terpene, wie Menthol oder Orangenterpen (Firma Weißmer Baltische HG, Hamburg).

Weiter geeignete handelsübliche Kohlenwasserstoffe oder Kohlenwasserstoffgemische sind Paraffinöl oder Mineralöl.

Desweiteren sind Fette und Ole auf nativer Basis geeignet, insbesondere pflanzliche Öle und bevorzugt Rapsöl.

Die gesättgten oder ungesättigten Fettalkohole, die erfindungsgemäß als Emulsionskomponente eingesetzt werden können, sind nach bekannten Verfahren, z. B. der Oxosynthese als Oxoalkohole oder nach der Guerbet-Reaktion als Guerbet-Alkohole erhältlich.

Als Polyoxyalkylenverbindungen auf Basis von Alkylenoxiden und/oder Fettsäureglyceriden von C₁₂-C₁₈-Fettsäuren werden insbesondere Polyethylenoxid und/oder Polypropylenoxid als solche verwendet, die unter anderen in der DE-AS-1 270 542 und der EP 0 247 509 B1 beschrieben werden.

Bei Einsatz von Terpenen werden diese bevorzugt in Mischung mit einem gesättigten oder ungesättigten Fettalkohol eingesetzt.

Der Anteil der Olphase in der Öl-in-Wasser-Emulsion beträgt 1-90 Gew.%, vorzugsweise 1-50 Gew.% und besonders bevorzugt 5-30 Gew.% der Gesamtemulsion.

Die erfindungsgemäß zu verwendenden ÖI-in-Wasser-Emulsionen werden als solche oder in Verdünnung mit Wasser oder Wasser und/oder lösungsmittelhaltigen Mischungen eingesetzt. Die Zugabe der erfindungsgemäß zu verwendenden Emulsion kann an jedem beliebigen Ort vor oder in dem Belebungsbecken erfolgen, wobei eine Zugabe zu dem zu reinigenden Abwasser unmittelbar vor dessen Eintritt in die Denitrifikationsstufe bevorzugt wird.

Die Zugabemenge beträgt vorzugsweise 0,1 bis 1000 ppm, besonders bevorzugt 0,5 bis 200 ppm und ganz besonders bevorzugt 1,0 bis 50 ppm, bezogen auf das zu reinigende Abwasser.

Durch die erfindungsgemäß zum Einsatz kommenden Emulsionen ist es möglich, die Denitrifikation um bis zu 50% zu verbessern. Die erfindungsgemäß zu verwendenden Emulsionen haben keine oder nur eine geringe Toxizität und können in die Wassergefährdungsklasse 1 eingestuft werden. Sie sind biologisch abbaubar.

Im folgenden wird die Erfindung anhand eines Beispiels erläutert. Diese Erläuterungen sind lediglich beispielhaft und schränken den allgemeinen Erfindungsgedanken nicht ein.

### Beispiel 2

Die Versuche für den Nachweis der verbesserten Denitrifikation wurden In einer kommunalen biologischen Kläranlage durchgeführt. Diese Kläranlage ist zweistraßlg ausgeführt und arbeitet nach dem Prinzip der vorgeschalteten Denitrifikation. Jede Straße weist eine Denitrifikation, ein Belebungsbecken und eine Nachklärung auf, die von dem Abwasser jeweils in dieser Reihenfolge durchströmt werden. Beide Straßen sind identisch aufgebaut, wobei die untere Straße zusätzlich eine Dosierstation für die kontinuierliche Zugabe einer Ol-in-Wasser-Emulsion aufweist. Diese Emulsion besteht aus 14 kg Terpen, 1,0 kg Hexadecanol, 7 kg eines 75%igen Paraffinsulfonats und 2,1 kg Wasser, die homogen aufgeschmolzen und anschließend unter Rühren in einem 60°C warme Lösung aus 74,5 kg Wasser und 1,4 kg eines mit 20 Mol Ethylenoxid umgesetzten Oleylalkohols eingegossen wurde.

Beide Straßen wurden mit demselben Abwasser und einer identischen Abwassermenge betrieben, wobei dem Abwasser, das in der unteren Straße behandelt wurde, so viel Öl-in-Wasser-Emulsion zugesetzt wurde, daß die Konzentration 2 ppm betrug.

Die Versuche wurden über einen Zeitraum von zwei Monaten durchgeführt. Es zeigte sich, daß die NO₃- Konzentration im Ablauf der Denitrifikationsstufe, die mit 2 ppm Öl-in-Wasser-Emulsion betrieben wird einen ca. 50% niedrigeren Wert aufweist, als die NO₃- Konzentration im Ablauf der Denitrifikationsstufe, die ohne die Öl-in-Wasser-Emulsion betrieben wird.

## Patentansprüche

1. Verwendung von Öl-in-Wasser-Emulsionen zur Reduzierung des Luft- undloder Sauerstoffbedarfs von aeroben biologischen Kläranlagen, **dadurch gekennzeichnet, daß** sie in der Ölphase wenigstens eine Verbindung der folgenden Verbindungsklassen oder eine Mischung aus Vertretern der folgenden Verbindungsklassen enthalten:
- gesättigte oder ungesättigte, offenkettige oder zyklische, normale oder isomere Kohlenwasserstoffe mit 8-30 Kohlenstoffatomen,
- gesättigte oder ungesättigte Fettalkohole, gesättigte oder ungesättigte Fettsäuren, Fettsäuremonoalkylester, Fettsäureamide oder Fettsäuremonoalkylamide von gesättigten oder ungesättigten Fettsäuren, wobei die Fettalkohole, die Fettsäuren und Festtsäureester der aufgeführten Verbindungen 8 -30 Kohlenstoffatome aufweisen,
- Mono- oder Polyester einer gesättigten oder ungesättigten Carbonsäure oder Dicarbonsäure mit 4-30 Kohlenstoffatomen mit einem Monoalkohol und/oder einem Polyol,
- Polyamide von gesättigten oder ungesättigten Fettsäuren mit 8-30 Kohlenstoffatomen und aliphatischen Polyaminen mit 2-6 Stickstoffatomen,
- acyclische, monocyclische und/oder bicyclische Terpene, insbesondere Terpenkohlenwasserstoffe und/oder Terpenalkohole und/oder
- Polyoxyalkylenverbindungen auf der Basis von Alkylenoxiden und Alkylenoxiden mit Fettalkoholen und/oder C₁₂-C₁₈-Fettsäuren undloder Fettsäureglyceriden von C₁₂-C₁₈-Fettsäuren.

2. Verwendung von Öl-in-Wasser-Emulsionen nach Anspruch 1, **dadurch gekennzeichnet, daß** sie als gesättigten Kohlenwasserstoff Octan, Tetradecan, Octadecan und/oder als ungesättigten Kohlenwasserstoff Decen, Hexadecen und/oder technische alpha-Olefine enthalten.

3. Verwendung von Öl-in-Wasser-Emulsionen nach Anspruch 1, **dadurch gekennzeichnet, daß** sie als Fettalkohole Octanol, Dodecanol, Tridecanol, Octadecanol und/oder Behenylalkohol enthält.

4. Verwendung von Öl-in-Wasser-Emulsionen nach einem der Ansprüche 1 bis 3, **dadurch gekennzeichnet, daß** sie als Fettsäuren Caprinsäure, Stearinsäure, Melissinsäure, Ölsäure und/oder Linolensäure enthalten.

5. Verwendung von Öl-in-Wasser-Emulsionen nach einem der Ansprüche 1 bis 4, **dadurch gekennzeichnet, daß** sie als Fettsäureester Stearylsäuremethylester, Palmetinsaureoctadecylester, Ölsäureoctylester, Glycerinmono-und/oder-trioleat, Ethylenglykoldilaurat, Sorbitanstearat und/oder-oleat und/oder Adipinsäuredibutylester enthalten.

6. Verwendung von Öl-in-Wasser-Emulsionen nach einem der Ansprüche 1 bis 5, **dadurch gekennzeichnet, daß** sie als Fettsäureamide Stearylamid, Kokosfettsäurebutylamid, Essigsäureoleylamid und/oder Ethylenbisstearylamid enthalten.

7. Verwendung von Öl-in-Wasser-Emulsionen nach einem der Ansprüche 1 bis 6, **dadurch gekennzeichnet, daß** sie als Polyoxyalkylenverbindungen Polyethylenoxid und/oder Polypropylenoxid enthalten.

8. Verwendung von Öl-in-Wasser-Emulsionen nach einem der Ansprüche 1 bis 7, **dadurch gekennzeichnet, daß** sie als natürliches Öl Rapsöl enthalten.

9. Verwendung von Öl-in-Wasser-Emulsionen nach einem der Ansprüche 1 bis 8, **dadurch gekennzeichnet, daß** sie einen Anteil der Ölphase von 1-90 Gew.-%, vorzugsweise 1-50 Gew.-%, besonders bevorzugt 5-30 Gew.-%, bezogen auf die Emulsion, enthalten und daß sie den aeroben biologischen Abwasserreinigungen in Mengen von 0,1 bis 1000 ppm, vorzugsweise 0,5 bis 200 ppm und besonders bevorzugt 1,0 bis 50 ppm, bezogen auf das zu reinigende Abwasser zugegeben werden.

10. Verwendung von Öl-in-Wasser-Emulsionen nach einem der Ansprüche 1 bis 9, **dadurch gekennzeichnet, daß** die Kläranlage eine kommunale und/oder industrielle Kläranlage ist.

11. Verwendung von Öl-in-Wasser-Emulsionen zur Verbesserung der Denitrifikation in aeroben biologischen Kläranlagen, **dadurch gekennzeichnet, daß** sie In der Ölphase wenigstens eine Verbindung der folgenden Verbindungsklassen oder eine Mischung aus Vertretern der folgenden Verbindungsklassen enthalten:
- gesättigte oder ungesättigte, offenkettige oder zyklische, normale oder isomere Kohlenwasserstoffe mit 8-30 Kohlenstoffatomen,
- gesättigte oder ungesättigte Fettalkohole, gesättigte oder ungesättigte Fettsäuren, Fettsäuremonoalkylester, Fettsäureamide oder Fettsäuremonoalkylamide von gesättigten oder ungesättigten Fettsäuren, wobei die Fettalkohole, die Fettsäuren und Festtsäureester der aufgeführten Verbindungen 8 -30 Kohlenstoffatome aufweisen,
- Mono- oder Polyester einer gesättigten oder ungesättigten Carbonsäure oder Dicarbonsäure mit 4-30 Kohlenstoffatomen mit einem Monoalkohol und/oder einem Polyol,
- Polyamide von gesättigten oder ungesättigten Fettsäuren mit 8-30 Kohlenstoffatomen und aliphatischen Polyaminen mit 2-6 Stickstoffatomen,
- acyclische, monocyclische und/oder bicyclische Terpene, insbesondere Terpenkohlenwasserstoffe und/oder Terpenalkohole und/oder
- Polyoxyalkylenverbindungen auf der Basis von Alkylenoxiden und Alkylenoxiden mit Fettalkoholen und/oder C₁₂-C₁₈-Fettsäuren und/oder Fettsäureglyceriden von C₁₂-C₁₈-Fettsäuren.

12. Verwendung von Öl-in-Wasser-Emulsionen nach Anspruch 11, **dadurch gekennzeichnet, daß** sie als gesättigten Kohlenwasserstoff Octan, Tetradecan, Octadecan und/oder als ungesättigten Kohlenwasserstoff Decen, Hexadecen undloder technische alpha-Olefine enthalten.

13. Verwendung von Öi-in-Wasser-Emulsionen nach Anspruch 11, **dadurch gekennzeichnet, daß** sie als Fettalkohole Octanol, Dodecanol, Tridecanol, Octadecanol und/oder Behenylalkohol enthält.

14. Verwendung von Öl-in-Wasser-Emulsionen nach einem der Ansprüche 11 bis 13, **dadurch gekennzeichnet, daß** sie als Fettsäuren Caprinsäure, Stearinsäure, Melissinsäure, Ölsäure und/oder Linolensäure enthalten.

15. Verwendung von Öl-in-Wasser-Emulsionen nach einem der Ansprüche 11 bis 14, **dadurch gekennzeichnet, daß** sie als Fettsäureester Stearylsäuremethylester, Palmetinsäureoctadecylester, Ölsäureoctylester, Glycerinmono-und/oder-trioleat, Ethylenglykoldilaurat, Sorbitanstearat und/oder -oleat und/oder Adipinsäuredibutylester enthalten.

16. Verwendung von Öl-in-Wasser-Emulsionen nach einem der Ansprüche 11 bis 15, **dadurch gekennzeichnet, daß** sie als Fettsäureamide Stearylamid, Kokosfettsäurebutylamid, Essigsäureoleylamid und/oder Ethylenbisstearylamid enthalten.

17. Verwendung von Öl-in-Wasser-Emulsionen nach einem der Ansprüche 11 bis 16, **dadurch gekennzeichnet, daß** sie als Polyoxyalkylenverbindungen Polyethylenoxid undloder Polypropylenoxid enthalten.

18. Verwendung von Öl-in-Wasser-Emulsionen nach einem der Ansprüche 11 bis 17, **dadurch gekennzeichnet, daß** sie als natürliches Öl Rapsöl enthalten.

19. Verwendung von Öl-in-Wasser-Emulsionen nach einem der Ansprüche 11 bis 18, **dadurch gekennzeichnet, daß** sie einen Anteil der Ölphase von 1-90 Gew.-%, vorzugsweise 1-50 Gew.-%, besonders bevorzugt 5-30 Gew.-%, bezogen auf die Emulsion, enthalten und daß sie den aeroben biologischen Abwasserreinigungen in Mengen von 0,1 bis 1000 ppm, vorzugsweise 0,5 bis 200 ppm und besonders bevorzugt 1,0 bis 50 ppm, bezogen auf das zu reinigende Abwasser zugegeben werden.

20. Verwendung von Öi-in-Wasser-Emulsionen nach einem der Ansprüche 11 bis 19, **dadurch gekennzeichnet, daß** die Kläranlage eine kommunale und/oder industrielle Kläranlage ist

## Claims

1. Use of oil-in-water emulsions for reducing the air and/or oxygen demand of aerobic biological sewage treatment plants, **characterized in that** the emulsions in their oil phase include at least one compound of the following classes of compounds or a mixture of members of the following classes of compounds:
- saturated or unsaturated, open-chain or cyclic, normal or isomeric hydrocarbons with 8-30 carbon atoms;
- saturated or unsaturated fatty alcohols, saturated or unsaturated fatty acids, fatty acid monoalkyl esters, fatty acid amides, or fatty acid monoalkylamides of saturated or unsaturated fatty acids, the fatty alcohols, fatty acids and fatty acid esters of the mentioned compounds having 8-30 carbon atoms;
- monoesters or polyesters of a saturated or unsaturated carboxylic acid or dicarboxylic acid with 4-30 carbon atoms with a monoalcohol and/or polyol;
- polyamides of saturated or unsaturated fatty acids having 8-30 carbon atoms with aliphatic polyamines having 2-6 nitrogen atoms;
- acyclic, preferably monocyclic and/or bicyclic terpenes, particularly terpene hydrocarbons and/or terpene alcohols; and/or
- polyoxyalkylene compounds based on alkylene oxides and alkylene oxides with fatty alcohols and/or C₁₂-C₁₈ fatty acids and/or fatty acid glycerides of C₁₂-C₁₈ fatty acids.

2. The use of oil-in-water emulsions according to claim 1, **characterized in that** the emulsions include octane, tetradecane, octadecane as saturated hydrocarbon, and/or decene, hexadecene, and/or technical α-olefins as unsaturated hydrocarbon.

3. The use of oil-in-water emulsions according to claim 1, **characterized in that** the emulsions include octanol, dodecanol, tridecanol, octadecanol and/or behenyl alcohol as fatty alcohols.

4. The use of oil-in-water emulsions according to any of claims 1 to 3, **characterized in that** the emulsions include capric acid, stearic acid, melissic acid, oleic acid and/or linolenic acid as fatty acids.

5. The use of oil-in-water emulsions according to any of claims 1 to 4, **characterized in that** the emulsions include methyl stearate, octadecyl palmitate, octyl oleate, glycerol mono- and/or trioleate, ethylene glycol dilaurate, sorbitan stearate and/or oleate, and/or dibutyl adipate as fatty acid esters.

6. The use of oil-in-water emulsions according to any of claims 1 to 5, **characterized in that** the emulsions include stearamide, coconut fatty acid butylamide, acetic acid oleylamide, and/or ethylenebisstearamide as fatty acid amides.

7. The use of oil-in-water emulsions according to any of claims 1 to 6, **characterized in that** the emulsions include poly(ethylene oxide) and/or poly(propylene oxide) as polyoxyalkylene compounds.

8. The use of oil-in-water emulsions according to any of claims 1 to 7, **characterized in that** the emulsions include rape oil as natural oil.

9. The use of oil-in-water emulsions according to any of claims 1 to 8, **characterized in that** the emulsions include an oil phase ratio of from 1 to 90% by weight, preferably from 1 to 50% by weight, and more preferably from 5 to 30% by weight, relative to the emulsion, and that the emulsions are added to the aerobic biological waste water purifications in amounts of from 0.1 to 1000 ppm, preferably from 0.5 to 200 ppm, and more preferably from 1.0 to 50 ppm, relative to the waste water to be purified.

10. The use of oil-in-water emulsions according to any of claims 1 to 9, **characterized in that** the sewage treatment plant is a municipal and/or industrial sewage treatment plant.

11. Use of oil-in-water emulsions for improving the denitrification in aerobic biological sewage treatment plants, **characterized in that** the emulsions in their oil phase include at least one compound of the following classes of compounds or a mixture of members of the following classes of compounds:
- saturated or unsaturated, open-chain or cyclic, normal or isomeric hydrocarbons with 8-30 carbon atoms;
- saturated or unsaturated fatty alcohols, saturated or unsaturated fatty acids, fatty acid monoalkyl esters, fatty acid amides, or fatty acid monoalkylamides of saturated or unsaturated fatty acids, the fatty alcohols, fatty acids and fatty acid esters of the mentioned compounds having 8-30 carbon atoms;
- monoesters or polyesters of a saturated or unsaturated carboxylic acid or dicarboxylic acid with 4-30 carbon atoms with a monoalcohol and/or polyol;
- polyamides of saturated or unsaturated fatty acids having 8-30 carbon atoms with aliphatic polyamines having 2-6 nitrogen atoms;
- acyclic, preferably monocyclic and/or bicyclic terpenes, particularly terpene hydrocarbons and/or terpene alcohols; and/or
- polyoxyalkylene compounds based on alkylene oxides and alkylene oxides with fatty alcohols and/or C₁₂-C₁₈ fatty acids and/or fatty acid glycerides of C₁₂-C₁₈ fatty acids.

12. The use of oil-in-water emulsions according to claim 11, **characterized in that** the emulsions include octane, tetradecane, octadecane as saturated hydrocarbon, and/or decene, hexadecene, and/or technical α-olefins as unsaturated hydrocarbon.

13. The use of oil-in-water emulsions according to claim 11, **characterized in that** the emulsions include octanol, dodecanol, tridecanol, octadecanol and/or behenyl alcohol as fatty alcohols.

14. The use of oil-in-water emulsions according to any of claims 11 to 13, **characterized in that** the emulsions include capric acid, stearic acid, melissic acid, oleic acid and/or linolenic acid as fatty acids.

15. The use of oil-in-water emulsions according to any of claims 11 to 14, **characterized in that** the emulsions include methyl stearate, octadecyl palmitate, octyl oleate, glycerol mono- and trioleate, ethylene glycol dilaurate, sorbitan stearate and/or oleate, and/or dibutyl adipate as fatty acid esters.

16. The use of oil-in-water emulsions according to any of claims 11 to 15, **characterized in that** the emulsions include stearamide, coconut fatty acid butylamide, acetic acid oleylamide, and/or ethylenebisstearamide as fatty acid amides.

17. The use of oil-in-water emulsions according to any of claims 11 to 16, **characterized in that** the emulsions include poly(ethylene oxide) and/or poly(propylene oxide) as polyoxyalkylene compounds.

18. The use of oil-in-water emulsions according to any of claims 11 to 17, **characterized in that** the emulsions include rape oil as natural oil.

19. The use of oil-in-water emulsions according to any of claims 11 to 18, **characterized in that** the emulsions include an oil phase ratio of from 1 to 90% by weight, preferably from 1 to 50% by weight, and more preferably from 5 to 30% by weight, relative to the emulsion, and that the emulsions are added to the aerobic biological waste water purifications in amounts of from 0.1 to 1000 ppm, preferably from 0.5 to 200 ppm, and more preferably from 1.0 to 50 ppm, relative to the waste water to be purified.

20. The use of oil-in-water emulsions according to any of claims 11 to 19, **characterized in that** the sewage treatment plant is a municipal and/or industrial sewage treatment plant.

## Revendications

1. Utilisation d'émulsions huile-dans-eau pour diminuer la demande en oxygène et/ou en air de stations d'épuration biologiques aérobies, **caractérisé en ce qu'**elles contiennent dans la phase huile au moins un composé appartenant aux catégories suivantes ou un mélange de membres des catégories de composés suivantes :
- hydrocarbures saturés ou insaturés, à chaîne ouverte ou cycliques, normaux ou isomères, comportant de 8 à 30 atomes de carbone,
- alcools gras saturés ou insaturés, acides gras saturés ou insaturés, monoalkylesters d'acide gras, amides ou monoalkylamides d'acides gras saturés ou insaturés, dans lesquels les acides gras, les alcools gras et les esters d'acide gras des composés cités comportent de 8 à 30 atomes de carbone,
- mono- ou polyesters d'un acide carboxylique ou dicarboxylique saturé ou insaturé comportant de 4 à 30 atomes de carbone avec un alcool monovalent et/ou un polyol,
- polyamides d'acides gras saturés ou insaturés comportant de 8 à 30 atomes de carbone et de polyamines aliphatiques comportant de 2 à 6 atomes d'azote,
- terpènes acycliques, de préférence monocyclique et/ou bicycliques, notamment hydrocarbures terpéniques et/ou alcools terpéniques, et/ou
- composés polyoxyalkylènes à base d'alkylène-oxydes et/ou d'alkylène-oxydes avec des alcools gras et/ou des acides gras en C₁₂-C₁₈ et/ou de glycérides d'acides gras en C₁₂-C₁₈.

2. Utilisation d'émulsions huile-dans-eau selon la revendication 1, **caractérisées en ce qu'**elles contiennent, en tant qu'hydrocarbure saturé, de l'octane, du tétradécane, de l'octadécane et/ou, en tant qu'hydrocarbure insaturé, du décène, de l'hexadécène et/ou des alpha-oléfines techniques.

3. Utilisation d'émulsions huile-dans-eau selon la revendication 1, **caractérisées en ce qu'**elles contiennent, en tant qu'alcools gras, de l'octanol, du dodécanol, du tridécanol, de l'octadécanol et/ou de l'alcool béhénylique.

4. Utilisation d'émulsions huile-dans-eau selon une des revendications de 1 à 3, **caractérisées en ce qu'**elles contiennent, en tant qu'acides gras, de l'acide caprique, de l'acide stéarique, de l'acide mélissique, de l'acide oléïque et/ou de l'acide linolénique.

5. Utilisation d'émulsions huile-dans-eau selon une des revendications de 1 à 4, **caractérisées en ce qu'**elles contiennent, en tant qu'ester d'acide gras, du méthylester d'acide stéarique, de l'octadécylester d'acide palmitique, de l'octylester d'acide oléique, du mono- et/ou trioléate de glycérol, du dilaurate d'éthylène glycol, du stéarate et/ou de l'oléate de sorbitane et/ou du dibutylester d'acide adipique.

6. Utilisation d'émulsions huile-dans-eau selon une des revendications de 1 à 5, **caractérisées en ce qu'**elles contiennent, en tant qu'amide d'acide gras, du stéarylamide, du butylamide d'acide gras de coco, de l'oléylamide d'acide acétique et/ou de l'éthylènedistéarylamide.

7. Utilisation d'émulsions huile-dans-eau selon une des revendications de 1 à 6, **caractérisées en ce qu'**elles contiennent, en tant que composés polyoxyalkylène, de l'oxyde de polyéthylène et/ou de l'oxyde de polypropylène.

8. Utilisation d'émulsions huile-dans-eau selon une des revendications de 1 à 7, **caractérisées en ce qu'**elles contiennent, en tant qu'huile naturelle, de l'huile de colza.

9. Utilisation d'émulsions huile-dans-eau selon une des revendications de 1 à 8, **caractérisées en ce qu'**elles contiennent une proportion de phase huile de 1 à 90 % en poids, plutôt de 1 à 50 % en poids, préférentiellement de 5 à 30 % en poids rapporté à l'émulsion, et **en ce qu'**elles sont ajoutées aux épurations biologiques en aérobie des eaux usées en une quantité de 0,1 à 1000 ppm, plutôt de 0,5 à 200 ppm, et préférentiellement de 1,0 à 50 ppm rapportée à la quantité d'eau usée à épurer.

10. Utilisation d'émulsions huile-dans-eau selon une des revendications de 1 à 9, **caractérisée en ce que** la station d'épuration est une station d'épuration industrielle ou une station d'épuration communale.

11. Utilisation d'émulsions huile-dans-eau pour améliorer la dénitrification dans les stations d'épuration biologiques aérobies, **caractérisées en ce qu'**elles contiennent dans la phase huile au moins un composé appartenant aux catégories suivantes ou un mélange de membres des catégories de composés suivantes :
- hydrocarbures saturés ou insaturés, à chaîne ouverte ou cycliques, normaux ou isomères, comportant de 8 à 30 atomes de carbone,
- alcools gras saturés ou insaturés, acides gras saturés ou insaturés, monoalkylesters d'acide gras, amides ou monoalkylamides d'acides gras saturés ou insaturés, dans lesquels les acides gras, les alcools gras et les esters d'acide gras des composés cités comportent de 8 à 30 atomes de carbone,
- mono- ou polyesters d'un acide carboxylique ou dicarboxylique saturé ou insaturé comportant de 4 à 30 atomes de carbone avec un alcool monovalent et/ou un polyol,
- polyamides d'acides gras saturés ou insaturés comportant de 8 à 30 atomes de carbone et de polyamines aliphatiques comportant de 2 à 6 atomes d'azote,
- terpènes acycliques, de préférence monocycliques et/ou bicycliques, notamment hydrocarbures terpéniques et/ou alcools terpéniques, et/ou
- composés polyoxyalkylènes à base d'alkylène-oxydes et d'alkylène-oxydes avec des alcools gras et/ou des acides gras en C₁₂-C₁₈ et/ou des glycérides d'acides gras en C₁₂-C₁₈.

12. Utilisation d'émulsions huile-dans-eau selon la revendication 11, **caractérisées en ce qu'**elles contiennent, en tant qu'hydrocarbure saturé, de l'octane, du tétradécane, de l'octadécane et/ou, en tant qu'hydrocarbure insaturé, du décène, de l'hexadécène et/ou des alpha-oléfines techniques.

13. Utilisation d'émulsions huile-dans-eau selon la revendication 11, **caractérisées en ce qu'**elles contiennent, en tant qu'alcools gras, de l'octanol, du dodécanol, du tridécanol, de l'octadécanol et/ou de l'alcool béhénylique.

14. Utilisation d'émulsions huile-dans-eau selon une des revendications de 11 à 13, **caractérisées en ce qu'**elles contiennent, en tant qu'acides gras, de l'acide caprique, de l'acide stéarique, de l'acide mélissique, de l'acide oléique et/ou de l'acide linolénique.

15. Utilisation d'émulsions huile-dans-eau selon une des revendications de 11 à 14, **caractérisées en ce qu'**elles contiennent, en tant qu'ester d'acide gras, du méthylester d'acide stéarique, de l'octadécylester d'acide palmitique, de l'octylester d'acide oléique, du mono- et/ou trioléate de glycérol, du dilaurate d'éthylène glycol, du stéarate et/ou de l'oléate de sorbitane et/ou du dibutylester d'acide adipique.

16. Utilisation d'émulsions huile-dans-eau selon une des revendications de 11 à 15, **caractérisées en ce qu'**elles contiennent, en tant qu'amide d'acide gras, du stéarylamide, du butylamide d'acide gras de coco, de l'oléylamide d'acide acétique et/ou de l'éthylènedistéarylamide.

17. Utilisation d'émulsions huile-dans-eau selon une des revendications de 11 à 16, **caractérisées en ce qu'**elles contiennent, en tant que composés polyoxyalkylène, de l'oxyde de polyéthylène et/ou de l'oxyde de polypropylène.

18. Utilisation d'émulsions huile-dans-eau selon une des revendications de 11 à 17, **caractérisées en ce qu'**elles contiennent, en tant qu'huile naturelle, de l'huile de colza.

19. Utilisation d'émulsions huile-dans-eau selon une des revendications de 11 à 18, **caractérisées en ce qu'**elles contiennent une proportion de phase huile de 1 à 90 % en poids, plutôt de 1 à 50 % en poids, préférentiellement de 5 à 30 % en poids rapporté à l'émulsion, et **en ce qu'**elles sont ajoutées aux traitements d'épurations biologiques aérobies des eaux usées en une quantité de 0,1 à 1000 ppm, plutôt de 0,5 à 200 ppm, et préférentiellement de 1,0 à 50 ppm rapportée à la quantité d'eau usée à épurer.

20. Utilisation d'émulsions huile-dans-eau selon une des revendications de 11 à 19, **caractérisée en ce que** la station d'épuration est une station d'épuration industrielle ou une station d'épuration communale.
